# EUROPEAN PATENT APPLICATION

(11) **EP 3 599 384 A1**
(43) Date of publication of application: **29.01.2020**
(21) Application number: 18185748.3
(22) Date of filing: 26.07.2018
(51) Int. Cl.: F16B 13/14, E04B 1/41

(54) **METHOD FOR OPTICALLY RATING A SCREW**

(71) Applicant: Hilti Aktiengesellschaft, 9494 Schaan (LI)
(72) Inventor: Pol, Frederic, 6800 Feldkirch (AT); Jimenez, Cristian, 9000 Sankt Gallen (CH); Ziltener, Michael, 8854 Siebnen (CH); Schneider, Roland, 6824 Schlins (AT); Claus, Alexander, 6800 Feldkirch (AT)
(74) Representative: Hilti Aktiengesellschaft Corporate Intellectual Property

(57) **Abstract**

The invention relates to a method for rating a screw (10), which is located in a hole (90) in a mineral substrate (6), and which is purportedly embedded in grout (20), comprising:
- an unscrewing step, in which the screw is unscrewed and removed out of the hole,
- following the unscrewing step, an inspection step, in which the hole is optically inspected for presence or absence of grout in the hole, and
- an evaluation step, in which the hole is rated "satisfactory" if grout has been detected in the hole in the inspection step and "unsatisfactory" otherwise.

## Description

The invention relates to a method for rating a screw.

EP0955476 B2 discloses a fixing arrangement in a concrete substrate, including a tapping screw arranged in a hole, wherein the hole is so filled with a hardenable grout that an annular gap between the wall of the hole and the screw is completely filled with the grout and, when the grout has hardened, the thread of the screw is embedded partly in the substrate and partly in the shell of grout.

US5730557 A describes a mortar mixture unit for chemical attachment of anchors in holes, which includes an essentially cylindrical container, which can be ruptured when inserting the anchor into the hole.

US2017138390 A1 discloses a system for dispensing hardenable grout when a screw is screwed into a concrete hole.

US2010247267 A1 proposes specific concrete screw shaft diameters, in relation to the diameter of the drill for making the hole in which the screw is to be placed. A grout can be optionally used.

DE102011003127A1 describes a glass cartridge containing a hardenable grout, wherein the glass cartridge is provided with a mechanical holding part, which is designed as a retaining spring. The cartridge is placed in a borehole and a screw is subsequently screwed in, thereby opening the cartridge.

WO 17025318 A1 describes a method for installing a concrete screw in concrete, in which a preliminary tread is cut in a first step and subsequently, the concrete screw is screwed into this preliminary thread, thereby widening the preliminary thread.

It is an object of the invention to make available a method which provides, whilst being particularly easy to implement, particularly reliable performance of the screw at particularly low effort.

This object is achieved by a device according to claim 1. Dependent claims refer to preferred embodiments of the invention.

The invention proposes a method for rating a screw, which is located in a hole in a mineral substrate, and which is purportedly embedded in grout, comprising:
- an unscrewing step, in which the screw is unscrewed and removed out of the hole,
- following the unscrewing step, an inspection step, in which the hole is optically inspected for presence or absence of grout, in particular of a grout liner, in the hole, and
- an evaluation step, in which the hole is rated "satisfactory" if grout, in particular a grout liner, has been detected in the hole in the inspection step and "unsatisfactory" otherwise.

When a screw, in particular a tapping screw, is to be embedded in a grout shell, there is a possibility that the step of placing grout in the hole is inadvertently omitted, with potentially unfavourable consequences on screw performance in some situations. However, since a screw can often bear significant loads even when the intended grout shell is absent, such an omission might be overlooked in some situations. Based on this finding, the invention has recognized that there can be a need for a method for rating a screw purportedly embedded in grout, in particular for rating it as "satisfactory" if the grout embedment is present or "unsatisfactory" if the grout embedment is missing. Another aspect of the invention is based on the finding that the grout shell, whose presence is to be determined, is able to stabilize the hole, allowing the screw to be unscrewed without potentially detrimental re-location of substrate dust or other debris in the borehole. Thus, if the grout shell is present as intended, it is possible to determine its presence by unscrewing the screw and optically inspecting the then accessible hole, and the screw can subsequently be screwed back in without excessive loss of performance caused by material relocation. Should, on the other hand, the optical inspection reveal that the grout is missing, material relocation caused by the associated unscrewing is not a significant issue, since the hole needs to be strengthened or re-drilled, or other corrective action taken anyway. Thus, the invention provides an easy measure to provide particularly high reliability of the screw purportedly embedded in grout.

For visual inspection, a sensor can be used. In a particularly easy way of carrying out the method, the hole can be simply visually inspected, preferably by using the naked eye.

The screw is preferably a tapping screw, in particular a tapping screw with respect to the substrate, i.e. it is able to form, in particular to cut, a mating thread in the substrate. The hole can preferably be a blind hole. The screw is, in particular with its shaft and more particular with its tip, located in the hole. In particular, the screw is threadedly engaged with the substrate, in particular at the wall of the hole, i.e. the screw has a thread which is arranged in a mating thread in the substrate, in particular in the wall of the hole. Advantageously, the mating thread is a mating thread tapped at least partly by the screw itself. The mineral substrate can preferably be a concrete substrate or a masonry substrate.

The grout comprises a hardenable mass and can for example be epoxy-based or cement-based.

As already indicated before, the method can include, following the inspection step, a re-installation step, in which the screw is screwed back into the hole. Weather the re-installation step is carried out at all, at what time the re-installation step takes place and/or weather additional steps such as a hole-reinforcing step, are carried out between the inspection step and the re-installation step can be made dependent on the outcome of the evaluation step.

Preferably, the screw has a thread, the method is for rating a screw, which is located in a hole in a mineral substrate with its thread engaging a mating thread in the substrate, and which is purportedly embedded in grout, and in the re-installation step, the screw is screwed back into the hole, the thread again following the mating thread. Thus, the screw thread is screwed back into that mating thread in which it was originally located. This can provide particularly good performance at low effort.

The screw can have a head, for example a hex-head. The inventive method can be particularly useful in case of headed screws, since a screw head often impedes a visual inspection for the presence or absence of grout. In particular, the screw has a shaft, with the thread being provided on the shaft. If present, the head can preferably be located at the rearward end of the shaft, opposite the tip of the shaft.

The ratio of the diameter of the thread of the screw to the pitch of the thread of the screw can be between 1 and 2, especially between 1.2 and 1.45. These are typical thread dimensions for screws that are intended for tapping insertion in mineral substrates, particularly concrete or masonry substrates. In particular, and in line with the usual definition, the pitch can be understood to be the axial distance between successive turns of a thread flight.

The invention also relates to a method for installing a screw in a hole in a mineral substrate, in which grout is placed in the hole, subsequently, the screw is screwed, tappingly, into the hole, and subsequently, the inventive method for rating a screw is used with the screw. Thus, the method for rating a screw is performed after the screw has been installed in a mineral substrate.

Features that are described here in connection with the inventive method for installing a screw can also be used in connection with the inventive method for rating a screw and features that are described here in connection with the inventive method for rating a screw can also be used in connection with the inventive method for installing a screw.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.

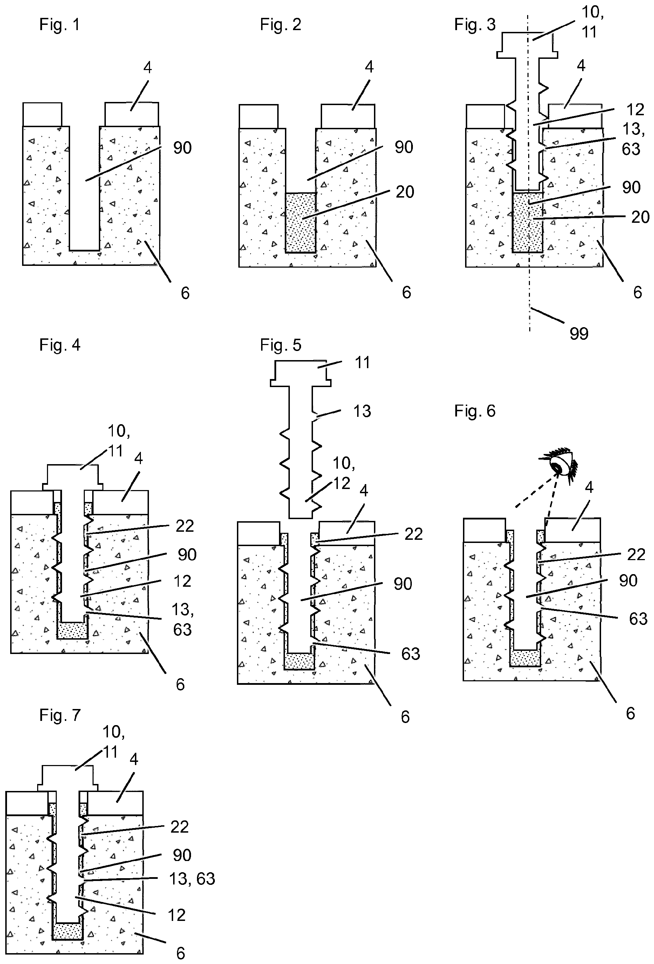

Figures 1 to 7 show, in side view, consecutive steps of an example of a method for installing a screw in a hole in a mineral substrate, including a method for rating the screw.

First, and as shown in figure 1, a hole 90 is provided in a substrate 6. The substrate 6 is preferably a concrete substrate, and the hole 90 can be a blind hole, that can for example be provided by drilling.

Subsequently, and as shown in figure 2, a quantity of hardenable grout 20 is placed in the hole 90. This can for example be done by injecting the grout into the hole 90 using a dispenser or by placing a cartridge containing the hardenable grout 20 in the hole 90. If a cartridge is used, the hardenable grout 20 can be a two component hardenable grout. In particular, the hardenable grout 20 can be a mortar.

An attachment part 4 is arranged at the surface of the substrate 6 surrounding the hole 90, so that an opening in the attachment part 4 is aligned with the hole 90. This can be done after placing, during placing or, as shown by way of example here, before placing the hardenable grout 20 in the hole 90.

As shown in figure 3, a screw 10 is then provided, which has a shaft 12 defining a longitudinal axis 99 and a thread 13 arranged on the shaft 12 and helically surrounding the shaft 12 and the longitudinal axis 99. The screw 10 is a tapping screw, which means that the screw 10, in particular its thread 13, is able to cut the substrate 6 and to form a mating thread 63 in the substrate 6. The screw 10 has a drive for imparting screw torque on the screw 10. In the present case, the drive is a head 11, in particular a hex-head.

The screw 10 is screwed into the hole 90, around the longitudinal axis 99, and in this connection, the thread 13 of the screw 10 forms a mating thread 63 in the substrate 6 in the wall of the hole 90.

As the screw 10 is lowered into the hole 90, it displaces hardenable grout 20, causing hardenable grout 20 to flow alongside the shaft 12 of the screw 10 towards the mouth of the hole 90. The hardenable grout 20 forms a liner 22 there, covering the wall of the hole 90. The screw 10 is screwed into the hole 90 until the head 11 of the screw 10, directly or via for example a washer, abuts on the attachment part 4, resulting in the configuration shown in figure 4.

The hardenable grout 20 of the liner 22 hardens and the liner 22 made up of the hardened grout 20 can improve performance of the screw 10. It is therefore of interest if the liner 22 is present as intended. However, since the head 11 of the screw 10 covers the hole 90 in the substrate 6, presence of the liner 22 cannot be easily determined visually. A dedicated method for rating the screw 10 either "satisfactory" or "unsatisfactory" is therefore employed.

This method includes, as illustrated in figure 5, an unscrewing step, in which the screw 10 is screwed backwards, out of the hole 90, and, as shown in figure 6, an inspection step, in which the hole 90 is optically inspected for presence or absence of the grout liner 22 in the hole 90, and an evaluation step, in which the hole 90 is rated "satisfactory" if the grout liner 22 has been detected in the inspection step and "unsatisfactory" otherwise. Optical inspection is carried out using eye vision here.

As shown in figure 7, a re-installation step is then carried out, in which the screw 10 is screwed back into the hole 90, with the thread 13 following the already-existing mating thread 63.

## Claims

1. Method for rating a screw (10), which is located in a hole (90) in a mineral substrate (6), and which is purportedly embedded in grout (20), comprising:
- an unscrewing step, in which the screw (10) is unscrewed and removed out of the hole (90),
- following the unscrewing step, an inspection step, in which the hole (90) is optically inspected for presence or absence of grout in the hole (90), and
- an evaluation step, in which the hole (90) is rated "satisfactory" if grout (20) has been detected in the hole (90) in the inspection step and "unsatisfactory" otherwise.

2. Method according to claim 1,
**characterized in that** it comprises,
- following the inspection step, a re-installation step, in which the screw (10) is screwed back into the hole (90).

3. Method according to claim 2,
**characterized in that**,
- the screw (10) has a thread (13),
- the method is for rating a screw (10), which is located in a hole (90) in a mineral substrate (6) with its thread (13) engaging a mating thread (63) in the substrate (6), and which is purportedly embedded in grout (20), and
- in the re-installation step, the screw (10) is screwed back into the hole (90), the thread (13) again following the mating thread (63).

4. Method according to any of the preceding claims,
**characterized in that**
the screw (10) has a head (11).

5. Method according to any of the preceding claims,
**characterized in that**
the ratio of the diameter of the thread (13) of the screw (10) to the pitch of the thread (13) of the screw (10) is between 1 and 2.

6. Method for installing a screw (10) in a hole (90) in a mineral substrate (6), in which grout (20) is placed in the hole (90),
subsequently, the screw (10) is screwed, tappingly, into the hole (90), and
subsequently, the method for rating a screw (10) according to any one of the preceding claims is used on the screw (10).
